(19) Europäisches Patentamt
European Patent Office
Office européen des brevets

(11) EP 2 080 681 A1

(12) **EUROPEAN PATENT APPLICATION**
published in accordance with Art. 153(4) EPC

(43) Date of publication:
**22.07.2009 Bulletin 2009/30**

(51) Int Cl.:
**B60T 13/573** (2006.01) **B60T 13/57** (2006.01)

(21) Application number: **07829246.3**

(86) International application number:
**PCT/JP2007/069508**

(22) Date of filing: **28.09.2007**

(87) International publication number:
**WO 2008/044610 (17.04.2008 Gazette 2008/16)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.09.2006 JP 2006266367**

(71) Applicant: **Bosch Corporation**
**Shibuya-ku**
**Tokyo 150-8360 (JP)**

(72) Inventors:
• **TAKASAKI, Yoshiyasu**
**Higashimatsuyama-Shi**
**Saitama 3558602 (JP)**

• **MORI, Yasushi**
**Higashimatsuyama-Shi**
**Saitama 3558602 (JP)**
• **WATANABE, Satoru**
**Higashimatsuyama-Shi**
**Saitama 3558602 (JP)**

(74) Representative: **Knapp, Thomas**
**Dreiss Patentanwälte**
**Postfach 10 37 62**
**70032 Stuttgart (DE)**

(54) **NEGATIVE PRESSURE BOOSTER AND BRAKE BOOSTER USING THE SAME**

(57)     A negative pressure booster according to the present invention is configured in such a manner that a vacuum valve seat member (30) does not move, a reaction disk (25) protrudes and comes into contact only with a reduced diameter portion (24a) of a spacer member (24) under an operation in which an input is equal to or smaller than a preset input. Accordingly, the servo ratio becomes the normal servo ratio. Under the operation in which the input exceeds the preset input, the vacuum valve seat member (30) moves rearward (input side) with respect to a valve body (4) by the pressure in a variable pressure chamber (9), and a reaction disk (25) is significantly protruded to come into contact also with an increased diameter portion (24b) in addition to a reduced diameter portion (24a) . Accordingly, although the balanced position in which both a vacuum valve (15) and an atmosphere valve (16) are closed is moved rearward and the servo ratio is increased, a pressure receiving area of a spacer member (24) is increased and the servo ratio is reduced, so that the servo ratio becomes the same as that when the input is equal to or smaller than the preset input.

FIG. 2

EP 2 080 681 A1

**Description**

Technical Field

The present invention relates to a technical field of a negative pressure booster for shortening an input stroke in a relatively large output area. In particular, in a brake system for a vehicle, the present invention relates to a technical field of a negative pressure booster used in a brake booster or the like in which a pedal stroke in middle/high deceleration areas at the time of a normal brake operation is shortened for a vehicle having a heavy vehicle weight and so on and a brake booster using the same.

In the related art, in the brake system for a motor vehicle such as a passenger car, a negative pressure booster using a negative pressure is used in a brake booster. Such a general negative pressure booster in the related art is partitioned into a constant pressure chamber in which a negative pressure is introduced by a power piston under the normal condition and a variable pressure chamber in which the pressure varies. Then, at the time of normal brake operation by normal depression of a brake pedal, a control valve is switched by an advance of an input shaft, and the atmospheric air is introduced in the variable pressure chamber. Then, a pressure difference is generated between the variable pressure chamber and the constant pressure chamber, and hence the power piston moves ahead, so that the negative pressure booster boosts an input from the input shaft (that is, a pedal depressing force) by a predetermined servo ratio and outputs the same. The output from the negative pressure booster causes a master cylinder to generate a master cylinder pressure, and the master cylinder pressure causes a wheel cylinder to operate, whereby the normal brake is operated.

Incidentally, vehicles such as IBOX vehicle or RV vehicle tend to increase in vehicle weight or deadweight in recent years. Therefore, the amount of depression of the brake (amount of pedal stroke) required for the normal brake operation in the vehicles as descried above is increased in association with the increase in vehicle weight or deadweight. In this manner, since the amount of depression of the brake by a driver is increased at the time of normal brake operation, the feeling of braking operation cannot be said to be good.

Accordingly, a negative pressure booster in which the feeling of operation is improved by shortening the stroke of an input member in an output area larger than a preset output is proposed in International Patent Publication 2004-101340. According to a negative pressure booster disclosed in this International Patent Publication, when a large braking force is required at the time of normal brake operation, a large braking force is obtained without increasing the pedal stroke of the brake pedal, so that a good feeling of operation is obtained.

Also, in the negative pressure booster disclosed in this International Patent Publication, the servo ratio is significantly changed under intermediate load conditions, that is, grade is achieved. In other words, the servo ratio is set to a small value when an input is equal to or smaller than a preset input set in advance, and the servo ratio is set to a large value when the input exceeds the preset input. Therefore, when a larger output is wanted, a large output is obtained not only by simply increasing the input, but also by the input boosted by a large servo ratio.

In contrast, various negative pressure boosters in which the feeling of operation is improved by being configured in such a manner that the servo ratio is set to a large value when the input (output) is equal to or smaller than the preset input (preset output), and the servo ratio is reduced, that is, the servo is downgraded, when the input (output) exceeds the preset input (preset output) under the intermediate load conditions are disclosed in JP-A-56-8749, JP-UM-B-7-8338, and JP-A-7-117660. In the respective negative pressure boosters disclosed in these publications, the servo ratio is changed from a large servo ratio to a small servo ratio by setting a pressure receiving area of a reaction disk as reaction means which receives a reaction force from an output shaft and an input shaft to a small value when the input is equal to or smaller than the preset input and setting the same to a large value when the input significantly exceeds the preset input.

However, with the negative pressure booster disclosed in the International Patent Publication described above, although the stroke of the input member is shortened in the large output area as described above, the output is also increased correspondingly due to the servo upgrade. Therefore, although the stroke of the input member is shortened in the large output area, the output to be obtained by boosting the input at the same servo ratio as the servo ratio in the small output area cannot be obtained.

Also, with the negative pressure booster disclosed in the Japanese Unexamined Patent Application Publication and the Japanese Utility Model Publication described above, although the output is reduced by the servo downgrade in the large output area as described above, the stroke of the input member cannot be shortened in both cases.

Disclosure of Invention

Problems to be Solved by the Invention

An object of the present invention is to provide a negative pressure booster which is able to further improve the feeling of operation by shortening the stroke of an input member without changing the servo ratio substantially in an output area larger than a preset output and a brake booster using the same.

Means for Solving the Problems

In order to achieve the object described above, a negative pressure booster according to the present invention at least includes: an input shaft which is applied with an input; a valve body disposed in a shell so as to be capable of advancing and retracting; a power piston provided in the valve body for partitioning the interior of the shell into a constant pressure chamber in which a negative pressure is introduced and a variable pressure chamber in which the atmospheric air is introduced during operation; an output shaft connected to the valve body for outputting an output generated by the power piston and being boosted from the input via the valve body; a valve plunger connected to the input shaft and disposed in the valve body so as to be capable of sliding therein; a vacuum valve for controlling communication or blocking between the constant pressure chamber and the variable pressure chamber by the operation of the valve plunger; an atmosphere valve for controlling blocking or communication between the variable pressure chamber and at lest the atmospheric air; balanced position moving means for moving the balanced position in which both the vacuum valve and the atmosphere valve are closed toward the input side with respect to the valve body when the input exceeds a preset input under intermediate load conditions in which the input is boosted according to the pressure in the variable pressure chamber; reaction means for transferring a reaction force from the output shaft to the valve plunger; in which the reaction means transfers a reaction force larger than the reaction force transferred when the input or the output is equal to or smaller than a preset input or a preset output to the valve plunger when the input or the output exceeds the preset input or the present output.

The negative pressure booster according to the present invention is **characterized in that** the vacuum valve includes: a vacuum valve seat provided on the valve body so as to be capable of moving with respect thereto; and a vacuum valve portion provided on a valve body provided on the valve body so as to be capable of moving with respect thereto and being capable of coming into and out of seated engagement with the vacuum valve seat; the atmosphere valve includes: an atmosphere valve seat provided on the valve plunger; and an atmosphere valve portion provided on the valve body and being capable of coming into and out of seated engagement with the atmosphere valve seat, the balanced position moving means includes a vacuum valve seat member being provided on the valve body so as to be capable of moving relatively with respect thereto and having the vacuum valve seat; in which the vacuum valve seat member is configured to make the pressure in the variable pressure chamber act in the direction to bring the vacuum valve seat of the vacuum valve seat member into contact with the vacuum valve portion of the valve body, and to make an urging force of urging means act in the direction to move the vacuum valve seat of the vacuum valve seat member away from the vacuum valve portion of the valve body; and when the input or the output exceeds the preset input or the preset output, the vacuum valve seat member moves relatively with respect to the valve body in the direction in which the vacuum valve seat of the vacuum valve seat member comes into contact with the vacuum valve portion of the valve body.

In addition, the negative pressure booster according to the present invention is **characterized in that** the reaction means includes a reaction disk being deformed upon reception of a reaction force from the output shaft and coming into contact with the valve plunger or a spacer member for transferring the reaction force to the valve plunger or to the valve plunger via the spacer member, and a pressure receiving area which the reaction disk comes into contact with the valve plunger or the spacer member is set to be larger than in a case where the input or the output exceeds the preset input or the preset output than a case where the input or the output is equal to or smaller than the preset input or the preset output.

In addition, a brake booster according to the present invention used in a brake system of a vehicle and including a negative pressure booster for boosting a pedal depression force applied on a brake pedal before outputting the same is **characterized in that** the negative pressure booster is the negative pressure booster in the present invention described above, and a deceleration of the vehicle when the balanced position moving means starts to move the balanced position relatively toward the input side with respect to the valve body is set to a larger deceleration than the deceleration which has a probability to generate at the time of the normal brake operation.

According to the negative pressure booster in the present invention configured as described above, in order to obtain a large stroke of the output shaft in a high output area, the stroke amount of the input shaft may be shortened to a level shorter than the stroke amount required for acquiring the large stroke in a case of changing at the rate of change of the stroke amount of the input shaft with respect to the output in a low output area without substantially changing the servo ratio.

Also, the structure of the reaction means may be simplified by using the reaction disk as the reaction means and changing the pressure receiving area of the valve plunger or the spacer member which the reaction disk comes into contact with.

In contrast, according to the brake booster using the negative pressure booster according to the present invention, since the deceleration of the vehicle when the balanced position moving means starts to move the balanced position relatively toward the input side with respect to the valve body is set to the deceleration larger than the deceleration which has a probability to generate at the time of the normal brake operation, the middle/high deceleration (middle/high G) area of the vehicles having a heavy weight or the like may be set to the high output area and the low deceleration (low G) area is set to the low output area of the same. Therefore, the pedal stroke is shortened and the feeling of braking operation is effectively improved for the vehicles requiring a braking force larger under the normal operation in the middle/high G area than under the normal operation in the low G area.

Brief Description of the Drawings

[Fig. 1] Fig. 1 is a cross-sectional view showing an example of embodiments of a negative pressure booster according to the present invention in an inoperative condition.
[Fig. 2] Fig. 2 is a partially enlarged cross-sectional view showing a portion of a vacuum valve and an atmosphere valve in Fig. 1 in an enlarged scale.
[Fig. 3] Fig. 3 is a drawing showing input and output characteristics of the negative pressure booster in the example shown in Fig. 1.
[Fig. 4] Fig. 4 is a drawing for explaining operation of a vacuum valve seat member in the negative pressure booster in the example shown in Fig. 1 in a dynamically equivalent state.

Best Modes for Carrying Out the Invention

Referring now to the drawings, best modes for carrying out the present invention will be described.

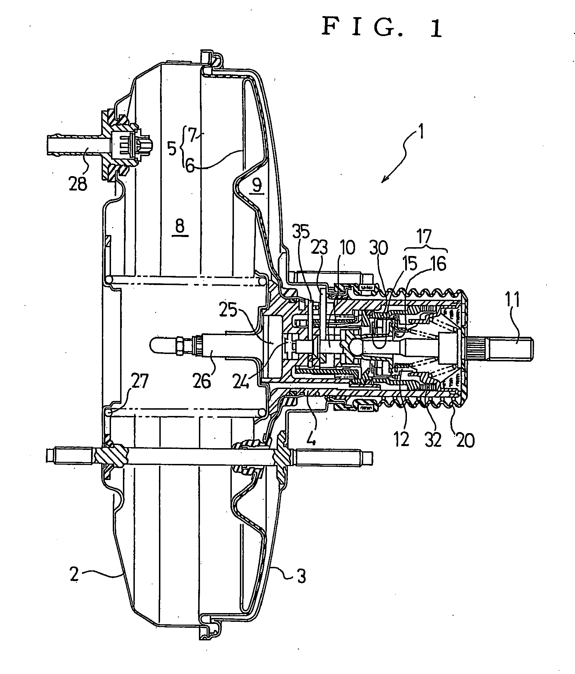

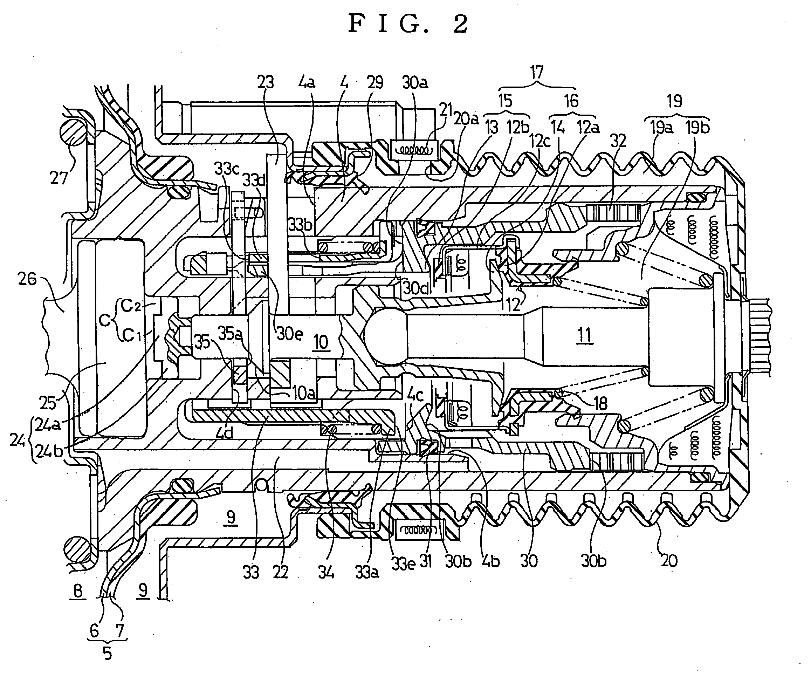

Fig. 1 is a cross-sectional view showing an example of embodiments of a negative pressure booster according to the present invention in an inoperative condition, and Fig. 2 is a partially enlarged cross-sectional view showing a portion of a vacuum valve and an atmosphere valve in Fig. 1 in an enlarged scale. In the following description, the terms "front" and "rear" represent "left and "right" in the respective drawings.
First of all, portions of the configuration of the negative pressure booster in this example which are the same as the negative pressure boosters in the related art disclosed in International Patent Publication, Japanese Unexamined Patent Application Publication, and Japanese Utility Model Publication described above, and are not characteristic portions of the present invention will be described in brief. In Fig. 1 and Fig. 2, reference numeral 1 designates a negative pressure booster, 2 designates a front shell, 3 designates a rear shell, 4 designates a valve body, 5 designates a power piston including a power piston member 6 mounted on the valve body 4 and a diaphragm 7 provided between the valve body 4 and the both shells 2, 3, 8 designates a constant pressure chamber which is one of two chambers defined by partitioning a space in the both shells 2, 3 by the power piston 5 and being introduced with a negative pressure in a normal condition, 9 designates a variable pressure chamber which is the other one of the two chambers described above, and being introduced with the atmospheric air pressure when the negative pressure booster 1 is in operation, 10 designates a valve plunger, 11 designates an input shaft being connected to an operating member such as a brake pedal, not shown, for controlling the operation of the valve plunger 10, 12 designates a valve body being provided hermetically and slidably on the valve body 4 and having an atmosphere valve portion 12a, a vacuum valve portion 12b and a connecting member 12c for connecting these members so as to be capable of moving integrally, 13 designates an annular vacuum valve seat, 14 designates an annular atmosphere valve seat formed on the valve plunger 10, 15 designates a vacuum valve including the vacuum valve portion 12b and the vacuum valve seat 13, 16 designates an atmosphere valve including the atmosphere valve portion 12a and the atmosphere valve seat 14, 17 designates a control valve including the vacuum valve 15 and the atmosphere valve 16 disposed in series with respect to each other for controlling to selectively switch the variable pressure chamber 9 between the constant pressure chamber 8 and the atmospheric air, 18 designates a first valve control spring for constantly urging the valve body 12 in the direction to cause the vacuum valve portion 12b to seat on the vacuum valve seat 13, 19 designates an atmosphere inlet passage including an outer peripheral passage 19a of the valve body 4 and an inner peripheral passage 19b communicating therewith, 20 designates a boot being provided between the rear shell 3 and the input shaft 11 and having an atmosphere inlet port 20a, 21 designates a silencer provided at the atmosphere inlet port 20a for reducing a noise generating at the control valve 17, 22 designates a vacuum passage, 23 designates a key member being inserted into a key hole 4a formed in the valve body 4 for restraining the relative movement of the valve plunger 10 with respect to the valve body 4 to a predetermined amount defined by the width of the key hole 4a in the axial direction and defining the respective limits of retraction of the valve body 4 and the valve plunger 10, 24 designates a spacer member which constitutes part of the reaction means, 25 designates a reaction disk which constitutes the other portion of the reaction means, 26 designates an output shaft, 27 designates a return spring, and 28 designates a negative pressure inlet port for introducing a negative pressure from a negative pressure source, not shown, to the constant pressure chamber 8.

Although not shown, in the same manner as the general negative pressure booster in the related art, the rear end portion of a master cylinder enters the interior of the constant pressure chamber 8 through the front shell 2, and the piston of the master cylinder is enabled to be operated by the output shaft 26. A through portion of the front shell 2 of the master cylinder is sealed by adequate sealing means, not shown, and the constant pressure chamber 8 is hermetically blocked from the atmospheric air. Also, in the same manner as the related art, the valve body 4 passes through the rear shell 3 so as to be movable, and the variable pressure chamber 9 is hermetically blocked from the atmospheric air by a seal member 29 shown in the drawing at the through portion.

Subsequently the configuration of the characteristic portions of the negative pressure booster 1 in this example will be described.

The negative pressure booster 1 in this example includes the spacer member 24 connected integrally with the valve plunger 10. Then, as in the case of the negative pressure boosters disclosed in the International Patent Publication, Japanese Unexamined Patent Application Publication, and the Utility Model Publication as described above, a predetermined clearance C in the axial direction is set between the front end surface of the spacer member 24 and the rear end surface of the reaction disk 25 opposing the front end surface of the spacer member 24 when the negative pressure booster 1 is not in operation. In such as case, the spacer member 24 is formed into a stepped shape with a cylindrical reduced diameter portion 24a projecting toward the reaction disk 25 and being provided concentrically with the valve plunger 10 and an increased diameter portion 24b provided concentrically with the valve plunger 10 so as to be guided by the valve body 4 and having a larger diameter than the reduced diameter portion 24a. Therefore, the clearance C includes a small clearance $C_1$ formed at a position where the reduced diameter portion 24a opposes the reaction disk 25 and a large clearance $C_2$ formed at a position where the increased diameter portion 24b opposes the reaction disk 25 like the negative pressure booster disclosed in the Japanese Unexamined Patent Publication and the Utility Model Publication as described above.

The spacer member 24 may be provided separately from the valve plunger 10.

The spacer member 24 does not necessarily have to be provided, and may be omitted. In this case, the reaction disk 25 comes into direct contact with the valve plunger 10, and the tip portion of the valve plunger 10 is provided with a reduced diameter portion and an increased diameter portion similar to the reduced diameter portion 24a and the increased diameter portion 24b of the spacer member 24.

The spacer member 24 and the reaction disk 25 which constitute the reaction means act in the similar manner as the reaction means disclosed in the Japanese Unexamined Patent Application Publication, and the Utility Model Publication as described above. In other words, when the negative pressure booster 1 is in operation, an output increases with increase of an input and the reaction disk 25 is protruded toward the spacer member 24, the small clearance $C_1$ is disappeared first and the reaction disk 25 comes into contact with the reduced diameter portion 24a. Accordingly, a jumping action is carried out. In addition, in an area in which the input does not exceed a preset input $F_0$, the reaction disk 25 comes into contact with the reduced diameter portion 24a, but does not come into contact with the increased diameter portion 24b, so that the pressure receiving area of the spacer member 24 is small, and a reaction force transferred from the reaction disk 25 to the spacer member 24 is relatively small. In the area in which the input exceeds the preset input $F_0$, the output is further increased and the large clearance $C_2$ is disappeared, and the reaction disk 25 also comes into contact with the increased diameter portion 24b, so that the pressure receiving area of the spacer member 24 is increased, and the reaction force transferred from the reaction disk 25 to the spacer member 24 is increased to a level larger than the case where the reaction disk 25 comes into contact only with the reduced diameter portion 24a.

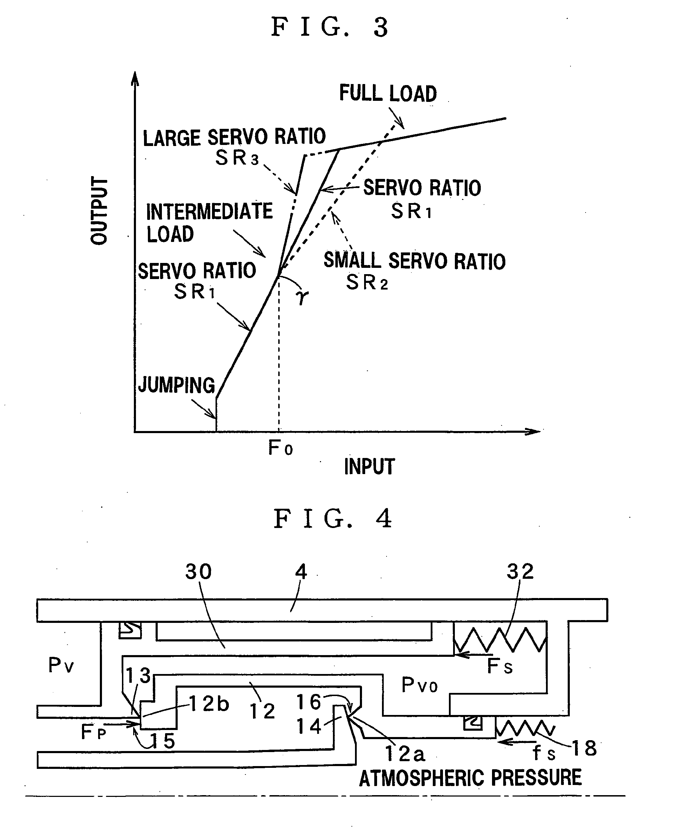

Therefore, the characteristics on the basis of the clearance C from among the input/output characteristics of the negative pressure booster 1 in this example are characteristics shown in Fig. 3. In other words, under intermediate load conditions of the negative pressure booster 1, when the input is larger than the input which causes the jumping action and does not exceed the preset input $F_0$, the input/output characteristic of a normal servo ratio SR1 shown by a solid line in Fig. 3 is assumed, while when the input exceeds the preset input $F_0$, the input/output characteristic of a small servo ratio SR2 smaller than the servo ratio SR1 as indicated by a dotted line in Fig. 3 is assumed.

In contrast, as shown in Fig. 2, in the negative pressure booster 1 in this example, a cylindrical vacuum valve seat member 30 as balanced position moving means in the present invention is slidably fitted into an inner hole 4b in the axial direction of the valve body 4 in the same manner as the negative pressure booster disclosed in the International Patent Publication described above. Then, the vacuum valve seat 13 is provided on the side of the inner periphery of the rear end of the vacuum valve seat member 30. Therefore, the vacuum valve seat 13 is also movable relatively with respect to the valve body 4.

Then, a portion between the inner peripheral surface of the inner hole 4b of the valve body 4 and the outer peripheral surface of the vacuum valve seat member 30 is maintained hermetically to at least prevent air from flowing from the front end to the rear end of the vacuum valve seat member 30 by the seal member 31 such as a cup seal provided on the outer peripheral surface of the vacuum valve seat member 30. In addition, a front end surface 30a of the vacuum valve seat member 30 is constantly in communication with the variable pressure chamber 9, so that the pressure in the variable pressure chamber 9 acts constantly on the front end surface 30a.

In the state in which the vacuum valve portion 12b of the valve body 12 is seated on the vacuum valve seat 13, an annular outer rear end surface portion of a rear end surface 30b of the vacuum valve seat member 30, which is a portion on the side of the outer periphery thereof with respect to the seating position of the vacuum valve portion 12b is constantly in communication with the constant pressure chamber 8, and a pressure (negative pressure) of the constant pressure chamber 8 acts on the outer rear end surface. Therefore, when the pressure difference is generated between the pressure in the variable pressure chamber 9 and the pressure in the constant pressure chamber 8 when the negative pressure booster 1 is in operation, the force caused by this pressure difference is applied to the vacuum valve seat member 30 toward the rear.

In addition, an extended arm portion 30c is provided on the vacuum valve seat member 30 so as to extend from the front end surface 30a toward the front in the axial direction. The extended arm portion 30c is formed with an axial direction hole 30d. Provided between the outer peripheral side of the rear end surface 30b of the vacuum valve seat member 30 and the valve body 4 is a second valve control spring 32 formed of an annular leaf spring (which corresponds to urging means in the present invention) in a compressed state in series with the vacuum valve seat member 30, and the vacuum valve seat member 30 is constantly urged toward the front by the second valve control spring 32.

Subsequently, the operation of the vacuum valve seat member 30 in this example will be described.
The operation of the vacuum valve seat member 30 is the same as the vacuum valve seat member disclosed in International Patent Publication described above and since it is easily understood by referring the corresponding International Patent Publication, the description here will be made briefly. When the negative pressure booster 1 is not in operation, the vacuum valve seat member 30 is positioned at an inoperative position shown in Fig. 2, where the front end surface 30a of the vacuum valve seat member 30 is in contact with a stepped portion 4c of the valve body 4. The vacuum valve seat 13 positioned in a state of being positioned in this manner is set to be the same state as the vacuum valve seat formed integrally with the valve body 4 of the general negative pressure booster in the related art. Therefore, with the vacuum valve seat member 30 positioned at this position when the negative pressure booster 1 is not in operation, the vacuum valve portion 12b is not seated on the vacuum valve seat 13, so that the vacuum valve 15 is opened.

When an input is applied to the input shaft 11 by the operation of the operating member, and hence the negative pressure booster 1 is operated, the atmospheric air is introduced into the variable pressure chamber 9 as in the case of the general negative pressure booster in the related art, and a pressure difference is generated between the variable pressure chamber 9 and the constant pressure chamber 8. Therefore, the force caused by this pressure difference is also applied to the vacuum valve seat member 30 toward the rear. This force has a magnitude according to the pressure difference between the variable pressure chamber 9 and the constant pressure chamber 8, that is, to the magnitude of the input applied to the input shaft 11. The vacuum valve portion 12b is seated on the vacuum valve seat 13 when the negative pressure booster 1 is in operation.

Then, when the force caused by the pressure difference is equal to or smaller than the sum of the spring load of the second valve control spring 32 and the spring load of the first valve control spring 18 of the valve element 12 at this time (that is, equal to or smaller than the preset input $F_0$ ($F_0$ is shown in Fig. 3) at the time when the input applied to the input shaft 11 is set in advance and is varied so as to increase the pressure receiving area of the spacer member 24 described above), the vacuum valve seat member 30 does not move with respect to the valve body 4, and is maintained in an inoperative position shown in Fig. 1 and Fig. 2. Also, when the force caused by the pressure difference is increased to a level larger than the sum of the above-described both spring loads (that is, the input applied to the input shaft 11 is larger than the preset input $F_0$), the vacuum valve seat member 30 moves rearward relatively with respect to the valve body 4 while pressing the vacuum valve portion 12b of the valve body 12. Therefore, by the rearward movement of the vacuum valve seat member 30 causes the vacuum valve seat 13 to protrude rearward with respect to the position in the normal condition.

Incidentally, when the vacuum valve seat member 30 strokes relatively rearward with respect to the valve body 4, the atmosphere valve portion 12a of the atmosphere valve 16 strokes relatively rearward with respect to the valve body 4 by the same amount as the relative stroke amount of the vacuum valve seat member 30. Therefore, the balanced position of the control valve 17 in which the vacuum valve 15 and the atmosphere valve 16 are both closed is moved rearward. Therefore, assuming that the amount of input stroke of the input shaft 11 is the same, the valve opening amount between the atmosphere valve portion 12a and the atmosphere valve seat 14 is increased by the amount of relative stroke of the vacuum valve seat member 30 in comparison with the case in which the vacuum valve seat member 30 is assumed not to make relative stroke. That is, in a state in which both the vacuum valve 15 and the atmosphere valve 16 are closed and hence are in the balances state under the intermediate load conditions of the negative pressure booster 1, if the input stroke amount of the input shaft 11 is the same, the relative strokes of the valve body 4 and the piston member 6 of the power piston 5 are larger than the case in which the vacuum valve seat member 30 is assumed not to make the relative movement by the amount of the relative stroke of the vacuum valve seat member 30. In other words, assuming that the respective stroke amounts of the valve body 4 and the piston member 6 of the power piston 5 are the same in the case in which the vacuum valve seat member 30 makes the relative stroke and in the case in which it is assumed not to make the relative stroke, the stroke of the input shaft 11 is shortened in the case in which the vacuum valve seat member 30 makes the relative stroke by the amount of the relative stroke of the vacuum valve seat member 30.

In contrast, the output stroke of the output shaft 26 at the time of relative stroke of the vacuum valve seat member 30 described above is increased by the increase in the respective strokes of the valve body 4 and the piston member 6 of the power piston 5 assuming that the amount of the input stroke of the input shaft 11 is the same as described above. However, under intermediate load conditions, in the same manner as the negative pressure booster in the related art, since the reaction disk 25 is protruded toward the spacer member 24 and hence the thickness of the axial direction of the reaction disk 25 is reduced, it is smaller than the amount of relative stroke in the case in which the respective strokes of the valve body 4 and the piston member 6 of the power piston 5 are increased as described above.

Then, since the vacuum valve seat member 30 is protruded rearward while pressing the vacuum valve portion 12b of the valve body 12, the valve body 12 is moved rearward, and the atmosphere valve portion 12a of the valve body 12 is also moved rearward. Therefore, the balanced position where the vacuum valve 15 and the atmosphere valve 16 are both closed is moved relatively rearwardly with respect to the valve body 4. Therefore, the clearance C with respect to the spacer member 24 is increased in both the small clearance $C_1$ and the large clearance $C_2$, and the jumping amount according to the increase in clearance increases the output. Then, since the amount of rearward movement of the vacuum valve seat 13 is increased with increase in pressure in the variable pressure chamber 9, the balanced position described above is also moved relatively rearward with respect to the valve body 4 with increase in pressure in the variable pressure chamber 9. Therefore, since the clearance C described above increases as the pressure in the variable pressure chamber 9 is increased, the jumping amount according to the increase in clearance is increased with increase in pressure in the variable pressure chamber 9.

The movement of the vacuum valve seat member 30 will be described in detail. Under intermediate load conditions, a force caused by the pressure difference applied to the vacuum valve seat member 30 in which the vacuum valve seat member 30 is moved and the control valve 17 is in the balanced state in which the vacuum valve 15 and the atmosphere valve 16 are both closed will be considered. In this balanced state of the control valve 17, the vacuum valve seat member 30 and the valve body 12 are brought into contact with each other and assume an integral unit, it can be qualified as an equivalent state of the forces applied to the vacuum valve seat member 30 and the valve body 12 which are integrated with each other as shown in Fig. 4.

Now in Fig. 4, a force Fp caused by the pressure difference applied to the vacuum valve seat member 30 and the valve body 12 will be applied by:

$$F_P = (p_V - P_{V0}) \cdot (\text{difference in effective pressure receiving area of the vacuum valve seat member 30}),$$

where $F_p$ is a force caused by the pressure difference applied to the vacuum valve seat member 30 and the valve body 12, $P_{V0}$ is the pressure in the constant pressure chamber 8, and $P_V$ is the pressure in the variable pressure chamber 9, and the force $F_P$ presses the vacuum valve seat member 30 and the valve body 12 rearward.

In contrast, a spring load Fs of the second valve control spring 32 and a spring load $f_S$ of the first valve control spring 18 press forward. Therefore, when the force $F_p$ described above is equal to or smaller than the sum of the spring loads ($F_S + f_S$), the vacuum valve seat member 30 does not move with respect to the valve body 4, and when the force $F_P$ exceeds the sum of the spring loads ($F_S + f_S$), the vacuum valve seat member 30 is moved rearward with respect to the valve body 4. Here, by the spring load $f_S$ of the first valve control spring 18 having a small absolute value and being set to a value extremely smaller than the spring load $F_S$ of the second valve control spring 32 ($F_S >> f_S$), the vacuum valve seat member 30 moves rearward with respect to the valve body 4 when the force $F_P$ is substantially larger than the spring load $F_S$ ($F_P > F_S$), and the vacuum valve seat member 30 does not move rearward with respect to the valve body 4 when the force $F_P$ is equal to or smaller than the spring load $F_S$ ($F_P \leq F_S$). In other words, the start of operation of the vacuum valve seat member 30 is substantially determined by the second valve control spring 32. Therefore, when the pressure in the variable pressure chamber 9 is increased, and the force $F_P$ exceeds the preset spring load, the vacuum valve seat member 30 starts to move rearward.

Then, the input of the negative pressure booster 1 corresponding to the range of the force $F_P$ that the vacuum valve seat member 30 does not move rearward with respect to the valve body 4, that is, the range of a pressure $P_V$ in the variable pressure chamber 9 is set to the range equal to or smaller than the preset input $F_0$ which is the relatively small input of the negative pressure booster 1 in the input/output characteristics shown in Fig. 3. Also, the input of the negative pressure booster 1 corresponding to the range of the force $F_P$ that the vacuum valve seat member 30 moves rearward with respect to the valve body 4, that is, the range of the pressure $P_V$ in the variable pressure chamber 9 is set to the range equal to or larger than the preset input $F_0$ in the input/output characteristics shown in Fig. 3.

Therefore, the characteristic on the basis of the vacuum valve seat member 30 from among the input/output characteristics of the negative pressure booster 1 in the example is such that under intermediate load conditions of the negative pressure booster 1 as shown in Fig. 3, since the vacuum valve seat member 30 does not move when the input is larger than the input which causes the jumping action and equal to or lower than the preset input $F_0$, the input /output characteristic of the normal servo ratio SR1 shown by a solid line in Fig. 3 is assumed, and when the input exceeds the preset input $F_0$, the vacuum valve seat member 30 moves rearward, and hence the input/output characteristic of a large servo ratio SR3 which is larger than the servo ratio SR1 shown by a double-chain line in Fig. 3 is assumed.

Then, in the negative pressure booster 1 in this example, under intermediate load conditions, the input when the pressure receiving area of the spacer member 24 is changed to be increased as described above and the input when the vacuum valve seat member 30 moves rearward with respect to the valve body 4 are set to the same preset input $F_0$, and the servo ratio in the input area exceeding the preset input $F_0$ is set to be the servo ratio SR1 under the normal operation in the range in which the input is equal to or smaller than the preset input $F_0$ by the interaction between the small servo ratio SR2 set on the basis on the fact that the pressure receiving area of the spacer member 24 is large and the large servo ratio SR3 set on the basis of the fact that the vacuum valve seat member 30 is moved. In other words, the negative pressure booster 1 in this example is set not to upgrade the servo even when the jumping amount by the vacuum valve seat member 30 is set to be increased under intermediate load conditions.

A cylindrical member 33 of an operation assisting mechanism is disposed in the axial direction hole of the valve body 4 so as to be capable of sliding relatively with respect to the valve body 4. An annual flange 33a protruding outward is formed at the rear end of the cylindrical member 33, an axial direction hole 33b is formed at the center portion of the cylindrical member 33, and an axial direction hole 33c is formed at the front end portion of the cylindrical member 33. An operation assisting spring 34 is provided between the flange 33a and the valve body 4 in a compressed state, and the cylindrical member 33 is urged constantly rearward by a spring force of the operation assisting spring 34. When the cylindrical member 33 is stroked rearward with respect to the valve body 4 by a predetermined stroke or more, a rear end surface 33e of the cylindrical member 33 comes into contact with the front end surface 30a of the vacuum valve seat member 30 and presses the vacuum valve seat member 30 rearward against the spring force of the second valve control spring 32, so that the cylindrical member 33 causes the second valve control spring 32 to contract and moves the vacuum valve seat member 30 rearward with respect to the valve body 4.

Then, the key member 23 is provided so as to penetrate through the axial direction hole 33b of the cylindrical member 33 and even the axial direction hole 30d of the extended arm portion 30c. As shown in Fig. 2 in an enlarged scale, when the negative pressure booster 1 is not in operation, a front end portion 30e positioned in front of the axial direction hole 30d of the vacuum valve seat member 30 and a front end portion 33d positioned in front of the axial direction hole 33c of the cylindrical member 33 come into contact with the key member 23 in contact with the rear shell 3 and positioned at the limit of retraction, so that the vacuum valve seat member 30 and the cylindrical member 33 are both positioned respectively at the limits of retraction thereof.

In addition, a cylindrical member positioning member 35 which positions the cylindrical member 33 in the axial direction with respect to the valve body 4 under the normal operation is penetrated through the key hole 4a of the valve body 4, the axial direction hole 33c of the cylindrical member 33 , and a radial direction hole 4d of the valve body 4. Although not shown in detail, when the front end portion 33d of the cylindrical member 33 moves away from the key member 23 under the normal operation, when an attempt is made by the cylindrical member 33 to move rearward with respect to the valve body 4 by the spring force of the operation assisting spring 34, the cylindrical member 33 engages the cylindrical member positioning member 35 and is prevented from moving rearward, and hence is positioned in the axial direction with respect to the valve body 4. Accordingly, under the normal operation, the rear end surface 33e of the cylindrical member 33 is prevented from coming into contact with the front end surface 30a of the vacuum valve seat member 30.

The valve plunger 10 is provided with a tapered lock releasing portion 10a for releasing the engagement between the cylindrical member 33 and the cylindrical member positioning member 35. When the operating member is depressed more quickly than in the state of normal operation for an emergency operation and the valve plunger 10 is moved forward with respect to the valve body 4 by a predetermined amount of more, the lock releasing portion 10a comes into contact with an edge portion 35a of the cylindrical member positioning member 35, and the engagement of the cylindrical member 33 and the cylindrical member positioning member 35 is released, whereby the cylindrical member 33 presses and moves the vacuum valve seat member 30 rearward with respect to the valve body 4 as described above.

Subsequently, the operation of the negative pressure booster 1 in this example will be described.

(When the negative pressure booster is not in operation)

A negative pressure is constantly introduced into the constant pressure chamber 8 of the negative pressure booster 1 through the negative pressure inlet port 28. When the negative pressure booster 1 shown in Fig. 1 and Fig. 2 is under the inoperative condition, the key member 23 is in contact with the rear shell 3 and positioned at the limit of retraction. Therefore, the valve body 4 and the valve plunger 10 are also positioned at the limits of retraction by the key member 23, and the power piston 5, the input shaft 11, and the output shaft 26 are also at the limits of retraction. Also, the front end surface 30a of the vacuum valve seat member 30 is in contact with the stepped portion 4c of the valve body 4 by the spring force of the second valve control spring 32 and the vacuum valve seat member 30 is at a position shown in Fig. 2, and the front end portion 33d of the cylindrical member 33 is brought into contact with the key member 23 by the spring force of the operation assisting spring 34 and the cylindrical member 33 is positioned at a position shown in Fig. 2.

In this inoperative condition, the atmosphere valve portion 12a of the valve body 12 is seated on the atmosphere valve seat 14 and the atmosphere valve 16 is closed, and the vacuum valve portion 12b of the valve body 12 is moved away from the vacuum valve seat 13 and the vacuum valve 15 is opened. Therefore, the variable pressure chamber 9 is blocked from the atmospheric air and is in communication with the constant pressure chamber 8 so that the variable pressure chamber 9 is introduced with a negative pressure, and hence there is no substantial pressure difference between the variable pressure chamber 9 and the constant pressure chamber 8. Therefore, the force caused by the pressure difference is not applied rearward to the vacuum valve seat member 30. Also, since the reaction force is not applied to the reaction disk 25 from the output shaft 26, the reaction disk 25 is not deformed, and is not protruded toward the spacer member 24.

(Under the normal operation in an input area equal to or smaller than the preset input $F_0$ of the negative pressure booster)

When the operating member, not shown, is operated at an operating velocity under the normal operation, the input shaft 11 advances and the valve plunger 10 also advances. By the advance of the valve plunger 10, the vacuum valve portion 12b of the valve body 12 is seated on the vacuum valve seat 13 to close the vacuum valve 15, and the atmosphere valve seat 14 moves away from the atmosphere valve portion 12a of the valve body 12 to open the atmosphere valve 16. In other words, the variable pressure chamber 9 is blocked from the constant pressure chamber 8 and is brought into communication with the atmospheric air. Therefore, air at the atmospheric pressure is introduced into the variable pressure chamber 9 through the atmosphere inlet port 20a, the outer peripheral passage 19a, the inner peripheral passage 19b, and the opened atmosphere valve 16, and the key hole 4a. Consequently, a pressure difference is generated between the variable pressure chamber 9 and the constant pressure chamber 8, and the power piston 5 advances and, in addition, the output shaft 26 advances via the valve body 4, whereby the piston of the mask cylinder, not shown, advances. At this time, the members supported by the valve body 4 such as the valve body 12, the vacuum valve seat member 30, and the cylindrical member 33 move integrally with the valve body 4.

Although the spacer member 24 advances by the advancement of the valve plunger 10, the reduced diameter portion 24a of the spacer member 24 does not reach the reaction disk 25 by the presence of the small clearance $C_1$ Therefore, since the reaction force from the output shaft 26 is not transferred from the reaction disk 25 to the spacer member 24, the reaction force is not transferred to the operating member via the valve plunger 10 and the input shaft 11. When the input shaft 11 further advances, the power piston 5 further advances as well, and the piston of the master cylinder further advances via the valve body 4 and the output shaft 26.

When the negative pressure booster 1 substantially generates an output, the reaction disk 25 is protruded rearward by a reaction force applied to the output shaft 26 and the small clearance $C_1$ is disappeared, and hence the reaction disk 25 comes into contact with the reduced diameter portion 24a of the spacer member 24. Accordingly, the reaction force from the output shaft 26 is transferred from the reaction disk 25 to the reduced diameter portion 24a of the spacer member 24, and is further transferred to the operating member via the valve plunger 10 and the input shaft 11, thereby being sensed by a driver. In other words, the negative pressure booster 1 demonstrates the jumping characteristic under the normal operation as shown in Fig. 3. This jumping characteristic is almost the same as the jumping characteristic of the general negative pressure booster in the related art.

When the negative pressure booster 1 is operated normally by an input of the input area equal to or lower than the preset input $F_0$, as described above, the force Fp which presses the vacuum valve seat member 30 by the pressure difference between the pressure $P_V$ in the variable pressure chamber 9 and the pressure $P_{V0}$ in the constant pressure chamber 8 is smaller than the sum of the respective spring forces of the first and second valve control springs 18, 32, and hence the vacuum valve seat member 30 does not move rearward with respect to the valve body 4. Also, the reaction force from the output shaft 26 is small, and the reaction disk 25 comes into contact only with the reduced diameter portion 24a of the spacer member 24 and does not come into contact with the increased diameter portion 24b. Therefore, the servo ratio is the same servo ratio SR1 as under the normal operation in the related art.

(When the normal operation in the input area equal to or smaller than the preset input $F_0$ of the negative pressure booster is released)

When the operating member is released in order to release the normal operation from the balanced state in which the atmosphere valve 16 and the vacuum valve 15 of the negative pressure booster 1 are both closed under the normal operation within a low output area, the input shaft 11 and the valve plunger 10 are both retracted. However, since air (atmospheric air) is introduced into the variable pressure chamber 9, the valve body 4 and the vacuum valve seat member 30 do not retract immediately. Accordingly, since the atmosphere valve seat 14 of the valve plunger 10 presses the atmosphere valve portion 12a of the valve element 12 rearward, the vacuum valve portion 12b is moved away from the vacuum valve seat 13, and the vacuum valve 15 is opened. Then, since the variable pressure chamber 9 is brought into communication with the constant pressure chamber 8 via the opened vacuum valve 15 and the vacuum passage 22, air introduced into the variable pressure chamber 9 is discharged into a vacuum source via the opened vacuum valve 15, the vacuum passage 22, the constant pressure chamber 8 and the negative pressure inlet port 28.

Accordingly, since the pressure in the variable pressure chamber 9 is reduced and hence the pressure difference between the variable pressure chamber 9 and the constant pressure chamber 8 is reduced, the power piston 5, the valve body 4, and the output shaft 26 are retracted by the spring force of the return spring 27. In association with the retraction of the valve body 4, the piston of the master cylinder and the output shaft 26 are also retracted by the spring force of the return spring of the piston of the master cylinder, and release of the normal operation is started.

When the key member 23 comes into contact with the rear shell 3 as shown in Fig. 1, the key member 23 stops and is not retracted further. However, the valve body 4, the valve plunger 10 and the input shaft 11 are further retracted. Then, the valve plunger 10 comes into contact with the key member 23 as shown in Fig. 2 and hence is not retracted further and, in addition, the front end $4a_1$ of the key hole 4a of the valve body 4 comes into contact with the key member 23 as shown in Fig. 2, and the valve body 4 does not retract any more. In this manner, the negative pressure booster 1 is brought into an initial inoperative condition as shown in Fig. 1 and Fig. 2.

(Normal operation in the input area exceeding the preset input $F_0$ of the negative pressure booster)

When carrying out the normal operation in the input area exceeding the preset input $F_0$ under the normal operation, since the force $F_P$ which presses the vacuum valve seat member 30 by the pressure difference between the pressure $P_V$ in the variable pressure chamber 9 and the pressure $P_{V0}$ in the constant pressure chamber 8 is larger than the sum of the respective spring forces of the first and second valve control springs 18, 32, the vacuum valve seat member 30 moves rearward with respect to the valve body 4 while compressing the first and second valve control springs 18, 32 and pressing the valve body 12. Also, the reaction force from the output shaft 26 is large, and the reaction disk 25 comes into contact also with the increased diameter portion 24b together with the reduced diameter portion 24a of the spacer member 24. Therefore, in the input area exceeding the preset input $F_0$, the servo ratio becomes the servo ratio SR1 which is the same as under the normal operation as described above.

When the negative pressure booster 1 is in operation in the input area exceeding the preset input $F_0$, the vacuum valve seat member 30 moves rearward with respect to the valve body 4 unlike when the negative pressure booster 1 is in operation in the input area equal to or smaller than the preset input $F_0$, and hence the output stroke increases with increase in the amount of movement of the vacuum valve seat member 30. In other words, the stroke of the input shaft 11 is shortened (for details, see International Patent Document described above).

(When releasing the normal operation in the input area exceeding the preset input $F_0$ of the negative pressure booster)

When the operating member is released for releasing the normal operation from the state in which the vacuum valve seat member 30 is in operation, the reaction disk 25 comes into contact with both the reduced diameter portion 24a and the increased diameter portion 24b, and the both the atmosphere valve 16 and the vacuum valve 15 are closed, the vacuum valve 15 is opened in the same manner as described above, and air introduced into the variable pressure chamber 9 is discharged into the vacuum source via the opened vacuum valve 15, the vacuum passage 22, the constant pressure chamber 8 and the negative pressure inlet port 28.

Accordingly, the pressure in the variable pressure chamber 9 is reduced as in the case described above, and the power piston 5, the valve body 4, and the output shaft 26 are retracted by the spring force of the return spring 27. In association with the retraction of the valve body 4, the piston of the master cylinder and the output shaft 26 are also retracted by the spring force of the return spring of the piston of the master cylinder, and release of the normal operation is started.

When the output of the negative pressure booster is reduced to a level smaller than the preset output at the preset input $F_0$, the pressure difference between the variable pressure chamber 9 and the constant pressure chamber 8 is reduced, and the force $F_P$ pressing the vacuum valve seat member 30 is reduced to a level smaller than the sum of spring loads Fs, fs of the first and second valve control springs 18, 32. Then, the vacuum valve seat member 30 moves relatively forward with respect to the valve body 4, and the vacuum valve seat member 30 is brought into the inoperative position as shown in Fig. 2, the vacuum valve portion 12b is moved significantly away from the vacuum valve seat 13 to open the vacuum valve 15, and the reaction disk 25 moves away from the increased diameter portion 24b and comes into contact only with the reduced diameter portion 24a. Accordingly, the normal operating state in the input area equal to or smaller than the preset input $F_0$ is achieved. The operation from then on is the same as the case of the normal operation in the input area equal to or smaller than the preset input $F_0$ described above, and the moved members of the negative pressure booster 1 are all eventually brought into the inoperative positions as shown in Fig. 2, and the normal operation by the input exceeding the preset input $F_0$ is released.

When the vacuum valve seat member 30 is stuck and hence it cannot be moved forward by the spring force of the second valve control spring 32 in the course that the vacuum valve seat member 30 returns to the inoperative position (the forward movement of the vacuum valve seat member 30 with respect to the valve body 4), by the retracting movement of the valve body 4, the front end portion 30e of the vacuum valve seat member 30 comes into contact with the key member 23 which comes into contact with the rear shell 3 and hence does not retract. Therefore, the vacuum valve seat member 30 is also prevented from retracting. However, the vacuum valve seat member 30 being stuck is forcedly moved forward with respect to the valve body 4 by the further retraction of the valve body 4. Therefore, the vacuum valve seat member 30 assumes the inoperative position shown in Fig. 2 with reliability to open the vacuum valve, and the negative pressure booster 1 assumes the inoperative position with reliability, so that the normal operation is released.

(When assisting the operation of the negative pressure booster)

When the operating member is operated more quickly than under the normal operation and the operation assist is carried out, the forward movements of the input shaft 11 and the valve plunger 10 with respect to the valve body 4 are increased. Then, the lock releasing portion 10a of the valve plunger 10 comes into contact with the edge portion 35a of the cylindrical member positioning member 35 to open the cylindrical member positioning member 35, and hence the engagement between the cylindrical member 33 and the cylindrical member positioning member 35 is released. Accordingly, since the cylindrical member 33 presses the vacuum valve seat member 30 and moves rearward with respect to the valve body 4, the servo ratio of the negative pressure booster 1 becomes a large servo ratio SR3 as described above. At this time, since the reaction disk 25 is not in contact with the spacer member 24 yet, the output of the negative pressure booster 1 is increased when the reaction disk 25 is protruded and is brought into contact with the reduced diameter portion 24a of the spacer member 24 by the reaction force from the output shaft 26. Therefore, when the jumping amount of the jumping characteristic at the time of the operation assist is increased and hence the servo ratio is increased as well, a large output is generated with a small operating force and a small operating amount. In this manner, the operation assist is carried out at the time of emergency operation or the like. In addition, since the reaction disk 25 does not come into contact with the increased diameter portion 24b of the spacer member 24 after the operation assist is started until the output reaches the preset output described above, the servo downgrade due to the change of the pressure receiving area of the spacer member 24 does not occur.

When the operating member is released after having carried out the operation assist, the valve body 4, the power piston 5, the valve plunger 10, the input shaft 11, and the output shaft 26 or the like are retracted and return to the inoperative positions shown in Fig. 1 and Fig. 2 as in the case of releasing the normal operation described above. In this case, since the lock releasing portion 10a of the valve plunger 10 is moved away from the edge portion 35a of the cylindrical member positioning member 35, the cylindrical member positioning member 35 is brought into a state of engageable with the cylindrical member 33. In contrast, the front end portion 33d of the cylindrical member 33 comes into abutment with the key member 23 which does not retract by being in contact with the rear shell 3 by the retraction of the valve body 4. Therefore, the cylindrical member 33 is also prevented from retracting. However, with the further retraction of the valve body 4, the cylindrical member 33 is forcedly moved forward with respect to the valve body 4 by the key member 23, and returns to the inoperative position.

In this manner, according to the negative pressure booster 1 in this example, in order to obtain a large stroke of the output shaft 26 in the high output area, the stroke amount of the input shaft 11 may be shortened to a level shorter than the stroke amount required for acquiring the large stroke in a case of changing at the rate of change of the stroke amount of the input shaft 11 with respect to the output in the low output area without changing the servo ratio. Also, the structure of the reaction means may be simplified by using the reaction disk 25 as the reaction means and changing the pressure receiving area of the spacer member 24 which the reaction disk 25 comes into contact with.

Therefore, by applying the negative pressure booster 1 in this example to the brake booster used in a brake system, setting the middle/high deceleration (middle/high G) area of vehicle having a heavy weight or the like to a high output area, and setting the low deceleration (low G) area of the same to the low output area, the pedal stroke is shortened and the feeling of braking operation is effectively improved for the vehicles requiring a braking force larger under the normal operation in the middle/high G area than under the normal operation in the low G area.

Also, by applying the operation assist action of the negative pressure booster 1 to the brake assist (BA) action, the jumping amount of the jumping characteristic at the time when the BA is operated may be increased and also the servo ratio may be increased, so that a large braking force is generated with a small pedal depressing force and a small pedal stroke. Therefore, since the BA can be operated at the time of emergency brake operation, the brake is operated with reliability with a required braking force.

In the example described above, although the operation of the vacuum valve seat member 30 is controlled by the pressure difference between the pressure in the variable pressure chamber 9 and the pressure in the constant pressure chamber, the present invention is not limited thereto, and the operation of the vacuum valve seat member 30 may be controlled only by the pressure in the variable pressure chamber 9 or by the pressure difference between the pressure in the variable pressure chamber 9 and other constant pressures. In addition, the operation of the vacuum valve seat member 30 may be controlled by the pressure according to the input applied to the input shaft 11 instead of the pressure in the variable pressure chamber 9.

Although the servo ratio is switched on the basis of the event that the input of the negative pressure booster 1 exceeds the preset input $F_0$ when switching the servo ratio from the normal servo ratio SR1 to the small and large servo ratios SR2, SR3 in the input/output characteristics of the negative pressure booster 1 in the example described above, the present invention is not limited thereto, and the servo ratio may be switched on the basis of the event that the output of the negative pressure booster 1 exceeds the preset output.

In addition, although the present invention is applied to the single-type negative pressure booster having the single power piston 5 in the example shown above, the present invention may be applied to a tandem-type negative pressure booster having a plurality of the power pistons 5. In addition, although the negative pressure booster in the present invention is applied to the brake system in the example shown above, it may be applied to other systems or apparatuses using the negative pressure booster.

Furthermore, only adding several components such as a pin 28, an arm 25, and a vacuum valve seat member 21 to the reaction disk 25, the holder 26, and the valve plunger 10 which are used in the general negative pressure booster in the related art is sufficient. Therefore, the structure for operating the vacuum valve seat member 21 may be simplified and assembly thereof is facilitated and, in addition, cost reduction is achieved.

In addition, at the time of emergency brake operation, the output of the negative pressure booster 1 may be increased by increasing the servo ratio than the servo ratio in the normal state by moving the balanced position between the atmosphere valve 15 and the vacuum valve 16 with respect to the valve body 4 quickly rearward. Accordingly, the brake assist (BA) control at the time of emergency brake operation is achieved, and the emergency brake may be quickly and effectively operated. In this manner, since the pedal stroke of the brake pedal is shortened and, simultaneously, the BA control may be carried out, so that the desirable brake control is achieved.

Fig. 5 is a drawing similar to Fig. 2 showing a second example of the embodiment of the negative pressure booster according to the present invention. Detailed description is omitted by designating the same components as in the first example described above by the same reference numerals, and the negative pressure booster is applied to the brake system as in the first example in the description.

Although the negative pressure booster 1 has the BA function in the first example described above, the negative pressure booster 1 in the second example does not have the BA function as shown in Fig. 5. Therefore, the negative pressure booster 1 in the second example is not provided with the valve operating member 29 for achieving the BA function and the spring 32 for urging the valve operating member 29.

Other configurations of the negative pressure booster 1 in the second example are the same as the configuration of the negative pressure booster 1 in the first example described above. Also, in the negative pressure booster 1 in the second example, the BA operation at the time of emergency brake operation is not carried out. In addition, the effects of the negative pressure booster 1 in the second example are the same as those of the negative pressure booster 1 in the first example described above other than the effects by the BA control. Although the vacuum valve seat member 21 and the arm 25 are formed separately in the examples descried above, the vacuum valve seat member 21 and the arm 25 may be formed integrally.

Industrial Applicability

The negative pressure booster according to the present invention may be used for the negative pressure booster for shortening the input stroke in the relatively large output area and, in particular, in the brake system for vehicles, may be used preferably for the brake booster for shortening the pedal stroke in the middle/high deceleration area under the normal operation of the vehicle or the like having a large weight.

**Claims**

1. A negative pressure booster comprising: an input shaft which is applied with an input; a valve body disposed in a shell so as to be capable of advancing and retracting; a power piston provided in the valve body for partitioning the interior of the shell into a constant pressure chamber in which a negative pressure is introduced and a variable pressure chamber in which the atmospheric air is introduced during operation; an output shaft connected to the valve body for outputting an output generated by the power piston and being boosted from the input via the valve body; a valve plunger connected to the input shaft and disposed in the valve body so as to be capable of sliding therein; a vacuum valve for controlling communication or blocking between the constant pressure chamber and the variable pressure chamber by the operation of the valve plunger; an atmosphere valve for controlling blocking or communication between the variable pressure chamber and at lest the atmospheric air; balanced position moving means for moving the balanced position in which both the vacuum valve and the atmosphere valve are closed toward the input side with respect to the valve body when the input exceeds a preset input under intermediate load conditions in which the input is boosted according to the pressure in the variable pressure chamber; reaction means for transferring a reaction force from the output shaft to the valve plunger,
wherein the reaction means transfers a reaction force larger than the reaction force transferred when the input or the output is equal to or smaller than a preset input or a preset output to the valve plunger when the input or the output exceeds the preset input or the present output.

2. The negative pressure booster according to Claim 1, wherein the vacuum valve includes:

   a vacuum valve seat provided on the valve body so as to be capable of moving with respect thereto; and a vacuum valve portion provided on a valve body provided on the valve body so as to be capable of moving with respect thereto and being capable of coming into and out of seated engagement with the vacuum valve seat;

   wherein the atmosphere valve includes an atmosphere valve seat provided on the valve plunger; and an atmosphere valve portion provided on the valve body and being capable of coming into and out of seated engagement with the atmosphere valve seat,
   the balanced position moving means includes a vacuum valve seat member being provided on the valve body so as to be capable of moving relatively with respect thereto and having the vacuum valve seat; and
   the vacuum valve seat member is configured to make the pressure in the variable pressure chamber act in the direction to bring the vacuum valve seat of the vacuum valve seat member into contact with the vacuum valve portion of the valve body, and to make an urging force of urging means act in the direction to move the vacuum valve seat of the vacuum valve seat member away from the vacuum valve portion of the valve body; and when the input or the output exceeds the preset input or the preset output, the vacuum valve seat member moves relatively with respect to the valve body in the direction in which the vacuum valve seat of the vacuum valve seat member comes into contact with the vacuum valve portion of the valve body.

3. The negative pressure booster according to Claim 1 or 2, wherein the reaction means includes a reaction disk being deformed upon reception of a reaction force from the output shaft and coming into contact with the valve plunger or a spacer member for transferring the reaction force to the valve plunger or to the valve plunger via the spacer member, and a pressure receiving area which the reaction disk comes into contact with the valve plunger or the spacer member is set to be larger than in a case where the input or the output exceeds the preset input or the preset output than a case where the input or the output is equal to or smaller than the preset input or the preset output.

4. A brake booster used in a brake system of a vehicle and includes a negative pressure booster for boosting a pedal depression force applied on a brake pedal before outputting the same,
wherein the negative pressure booster is the negative pressure booster according to any one of Claims 1 to 3,
wherein a deceleration of the vehicle when the balanced position moving means starts to move the balanced position relatively toward the input side with respect to the valve body is set to a larger deceleration than the deceleration which has a probability to generate at the time of normal brake operation.

# FIG. 1

EP 2 080 681 A1

# F I G. 2

EP 2 080 681 A1

# FIG. 3

FULL LOAD

LARGE SERVO RATIO
SR₃

OUTPUT

SERVO RATIO
SR₁

INTERMEDIATE
LOAD

SERVO RATIO
SR₁

SMALL SERVO RATIO
SR₂

γ

JUMPING

F₀

INPUT

# FIG. 4

30    4    32

Pv

Fs

13

12b  12  16    Pvo

14

Fp

15    12a

fs  18

ATMOSPHERIC PRESSURE

**INTERNATIONAL SEARCH REPORT**

International application No.

PCT/JP2007/069508

| A. CLASSIFICATION OF SUBJECT MATTER |
|---|
| *B60T13/573*(2006.01)i, *B60T13/57*(2006.01)i |

According to International Patent Classification (IPC) or to both national classification and IPC

| B. FIELDS SEARCHED |
|---|

Minimum documentation searched (classification system followed by classification symbols)
B60T13/573, B60T13/57

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2004/101340 A1 (Bosch Automotive Systems Corp.), 25 November, 2004 (25.11.04), Full text & US 2006/0207420 A1   & EP 1625988 A1 | 1-4 |
| Y | JP 56-8749 A (Nissan Motor Co., Ltd.), 29 January, 1981 (29.01.81), Full text (Family: none) | 1-4 |
| Y | JP 7-8338 Y2 (Jidosha Kiki Co., Ltd.), 01 March, 1995 (01.03.95), Full text (Family: none) | 1-4 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

Date of the actual completion of the international search
28 December, 2007 (28.12.07)

Date of mailing of the international search report
15 January, 2008 (15.01.08)

Name and mailing address of the ISA/
Japanese Patent Office

Authorized officer

Facsimile No.

Telephone No.

Form PCT/ISA/210 (second sheet) (April 2007)

17

**INTERNATIONAL SEARCH REPORT**

| International application No. |
|---|
| PCT/JP2007/069508 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 7-117660 A  (Aisin Seiki Co., Ltd.),<br>09 May, 1995 (09.05.95),<br>Full text<br>(Family: none) | 1-4 |
| A | JP 2004-17740 A  (Bosch Automotive Systems Corp.),<br>22 January, 2004 (22.01.04),<br>Full text<br>& US 2003/0230931 A1     & EP 1371536 A1 | 1-4 |
| E,Y | JP 2007-331419 A  (Bosch Corp.),<br>27 December, 2007 (27.12.07),<br>Full text<br>(Family: none) | 1-4 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004101340 A
- JP 56008749 A
- JP UMB78338 B
- JP 7117660 A